## Europäisches Patentamt

## European Patent Office

## Office européen des brevets

(19)

(11) Veröffentlichungsnummer: **0 021 208**
**B1**

(12) ## EUROPÄISCHE PATENTSCHRIFT

(45) Veröffentlichungstag der Patentschrift:
04.05.83

(51) Int. Cl.³: **C 23 C 11/16**, G 05 D 21/02, G 05 D 23/19, C 21 D 11/00

(21) Anmeldenummer: 80103182.4

(22) Anmeldetag: 09.06.80

(54) Anordnung zur Steuerung der Zusammensetzung der Atmosphäre eines Wärmebehandlungsofens.

(30) Priorität: 08.06.79 DE 2923285

(43) Veröffentlichungstag der Anmeldung:
07.01.81 Patentblatt 81/1

(45) Bekanntmachung des Hinweises auf die Patenterteilung:
04.05.83 Patentblatt 83/18

(84) Benannte Vertragsstaaten:
AT FR GB SE

(56) Entgegenhaltungen:
DE-A-1 758 471
DE-A-2 408 984
US-A-3 399 085
US-A-3 594 127
CONTROL ENGINEERING, Band 20, Nr. 2, Februar 1973, R. F. BALTERA et al.: »Program control of process temperature«, Seiten 36—38
HÄRTEREI TECHNISCHE MITTEILUNGEN, Band 31, Nr. 5, 1976, J. PAVLOSSOGLOU: »Optimierungsmodell einer Zweistufen-Boost/Diffusionsbehandlung (Zweistufen-Gasaufkohlungs-Steuerung)«, Seiten 251—256

(73) Patentinhaber: Aichelin GmbH,
D-7015 Korntal-Münchingen 1 (DE)

(72) Erfinder: Weiss, Heinrich, Dr.-Ing.,
Anton-Günther-Strasse 4, D-8900 Augsburg 22 (DE)

(74) Vertreter: Patentanwälte Dipl.-Ing. W. Scherrmann Dr.-Ing. R. Rüger, Webergasse 3, D-7300 Esslingen (DE)

METAL SCIENCE AND HEAT TREATMENT, Band 20, Nr. 3/4, 1978, YU. M. LAKHTIN et al.: »New systems of monitoring the nitriding process«, Seiten 306—310
CHEMICAL ABSTRACTS, Band 89, Nr. 10, September 1978, Zusammenf. Nr. 78511z, Seite 200, Columbus, Ohio, US
CHEMICAL ABSTRACTS, Band 66, Nr. 8, 1967, Zusammenfassung Nr. 31240v, Seite 3004, Columbus, Ohio, US, E. I. HOPE: »Automated nitriding using a duplex cycle«

## Anordnung zur Steuerung der Zusammensetzung der Atmosphäre eines Wärmebehandlungsofens

Die Erfindung betrifft eine Anordnung zur Steuerung der Zusammensetzung der Atmosphäre eines Wärmebehandlungsofens zum Nitrieren der Oberfläche von Eisenteilen oder dergleichen unter Verwendung eines wasserstoff- und ammoniakhaltigen Gases, mit einer zumindest einen Teil des ammoniakhaltigen Gases in die Ofenkammer einspeisenden Ammoniakspalteinrichtung, der ein die Spaltgaszufuhr zu der Ofenkammer in Abhängigkeit von Meßwerten für das Nitrierpotential regelnder Regler zugeordnet ist, dessen zugeführte Meßwerte von einem fortlaufend mit Gas aus der Ofenatmosphäre versorgten Meßwertgeber über eine Meßschaltung abgegeben werden.

Bei einer aus der DE-A-2 734 219 bekannten Meß- und Regelanordnung für eine Nitrieratmosphäre ist es bekannt, zumindest einen Teil des ammoniakhaltigen Gases über eine Ammoniakspalteinrichtung in die Ofenkammer einzuspeisen und dabei die Ammoniakspalteinrichtung selbst durch einen Regler so zu regeln, daß der Zersetzungsgrad des Ammoniaks in der Ofenkammer konstant gehalten wird. Zu diesem Zweck ist ein Meßgeber für das durch das Verhältnis $(P_{NH3}/P_{H2})^{1,5}$ definierte Nitrierpotential vorhanden, der in einem geschlossenen Nebenkreislauf mit Rückführung der Ofenatmosphäre angeordnet, d. h. dauernd von aus dem Ofen abgezogenem Gas durchströmt ist, das anschließend wieder in die Ofenkammer zurückgeleitet wird. Der Meßwertgeber besteht im wesentlichen aus einer Gasanalyseneinheit, die den $NH_3$- und/oder $H_2$-Anteil im Meßgas feststellt und hieraus über einen angeschlossenen Rechnerteil den Ist-Wert des Nitrierpotentials in der Ofenatmosphäre feststellt.

Die Nitrierwirkung der Oberfläche der Eisenteile hängt außer von der Zusammensetzung der Ofenatmosphäre auch von der Behandlungstemperatur und der Zeitdauer der Einwirkung der Ofenatmosphäre auf die Oberfläche ab. Diese Parameter können aber bei der bekannten Messung der Regelanordnung nicht ohne weiteres berücksichtigt werden, was bedeutet, daß, abhängig von der Art der gerade zu behandelnden Werkstücke, nicht nur der Regler der Ammoniakspalteinrichtung verstellt, sondern auch die anderen Verfahrensparameter eigens neu eingestellt werden müssen, um gute Nitrierergebnisse zu erzielen.

Aus »Control Engineering«, Bd. 20, Nr. 2, Februar 1973, S. 36–38, ist es bekannt, bei einem Nitrierverfahren die Prozeßtemperatur während des Vorgangs programmabhängig zeitgesteuert zu verändern. Hierbei wird lediglich darauf eingegangen, nach einer Änderung der Temperaturvorgabe die Totzeit des Systems bis zum Erreichen der gewünschten Temperatur abzuwarten, ehe die vor der Temperaturänderung angehaltene Zeitsteuerung des Prozesses erneut gestartet wird. Die selbsttätige programmgesteuerte Änderung anderer Prozeßparameter, insbesondere der Atmosphärenzusammensetzung bei einem Nitrierprozeß, ist nicht vorgesehen.

Der Erfindung liegt deshalb die Aufgabe zugrunde, einen Weg zu weisen, der es gestattet, in einfacher Weise bei der Bearbeitung unterschiedlicher Werkstücke auftretenden verschiedenen Verfahrensbedingungen Genüge zu leisten und dabei alle für das Ergebnis des Nitrierverfahrens wesentlichen Verfahrensparameter selbsttätig zu berücksichtigen.

Zur Lösung dieser Aufgabe ist die eingangs genannte Anordnung erfindungsgemäß dadurch gekennzeichnet, daß der die Spaltgaszufuhr zu der Ofenkammer beeinflussende Regler einem selbsttätigen zeitabhängigen Programmregler nachgeschaltet ist, der dem Regler einen programmabhängigen Sollwert vorgibt und daß durch den Programmgeber zusätzlich ein Regler für die Zufuhr des ammoniakhaltigen Gases zu der Ofenkammer sowie ein Temperaturregler für die Ofenkammer, jeweils durch Sollwertvorgabe, programmgemäß geführt sind.

Damit werden die für das Nitrierverfahren maßgebenden Parameter, wie die Gaszusammensetzung, die Temperatur in der Ofenkammer und die Zeiten, vollautomatisch programmgemäß geregelt, ohne daß es dazu eigener von Hand zu erfolgender Einstellvorgänge bedürfte. Über den Programmgeber kann, beispielsweise über eine Programmkassette, jeweils das für die gerade bearbeitete Werkstückart zweckmäßige Programm eingegeben werden; durch programmgemäße Einwirkung auf die einzelnen Regler stellt er sicher, daß der Nitrierprozeß exakt abläuft, so daß sich optimale Verfahrensergebnisse erzielen lassen.

Der die Spaltgaszufuhr zu der Ofenkammer beeinflussende Regler und der Regler für die Zufuhr des ammoniakhaltigen Gases zu der Ofenkammer können zu einer Regeleinheit zusammengefaßt sein. Besonders vorteilhaft ist es auf der anderen Seite, wenn in einer Zufuhrleitung des Spaltgases und einer Zufuhrleitung des ammoniakhaltigen Gases zu der Ofenkammer jeweils ein Steuerventil liegt und die Steuerventile durch den jeweils zugeordneten Regler angesteuert sind. Auf diese Weise erfolgt kein unmittelbarer Steuereingriff auf die Ammoniakspalteinrichtung; es wird vielmehr unmittelbar die Gaszufuhr zu der Ofenkammer geregelt. Dies ist deshalb von Bedeutung, weil aus praktischen Gründen es zweckmäßig ist, in der Ofenkammer einen etwa konstanten Gasüberdruck aufrechtzuerhalten, so daß bei einer Nachregelung des Nitrierpotentials sowohl die Zufuhr des ammoniakhaltigen Gasanteils als auch des Spaltgases eine Veränderung erfährt.

Um einen Überblick über den Verlauf des Nitrierverfahrens zu erhalten, ist es zweckmäßig, daß den einzelnen Reglern jeweils Aufzeichnungsvorrichtungen für für das Nitrierpotential kennzeichnende Werte und die Temperatur in der Ofenkammer nachgeschaltet sind.

Wenn mit der Anordnung eine sogenannte Zweistufen-Gasnitrierung vorgenommen werden soll, kann der Programmgeber ein zweistufiges Programm enthalten, wobei dann jeder der beiden Programmstufen ein eigener Regler für die Zufuhr des Spaltgases und des ammoniakhaltigen Gases zugeordnet ist.

Die selbsttätige Regelung des Nitrierverfahrens über den Programmgeber gewährleistet eine immer gleichbleibende, durch das jeweilige Programm vorgegebene Nitrierschicht. Die Dikke und Ausbildung der Verbindungszone (prozentualer Porositätsanteil) sowie die Diffusionszone werden dabei durch den Ablauf der Nitrierprozesse, die auf die einzelnen Werkstofe abgestimmt sind, bestimmt.

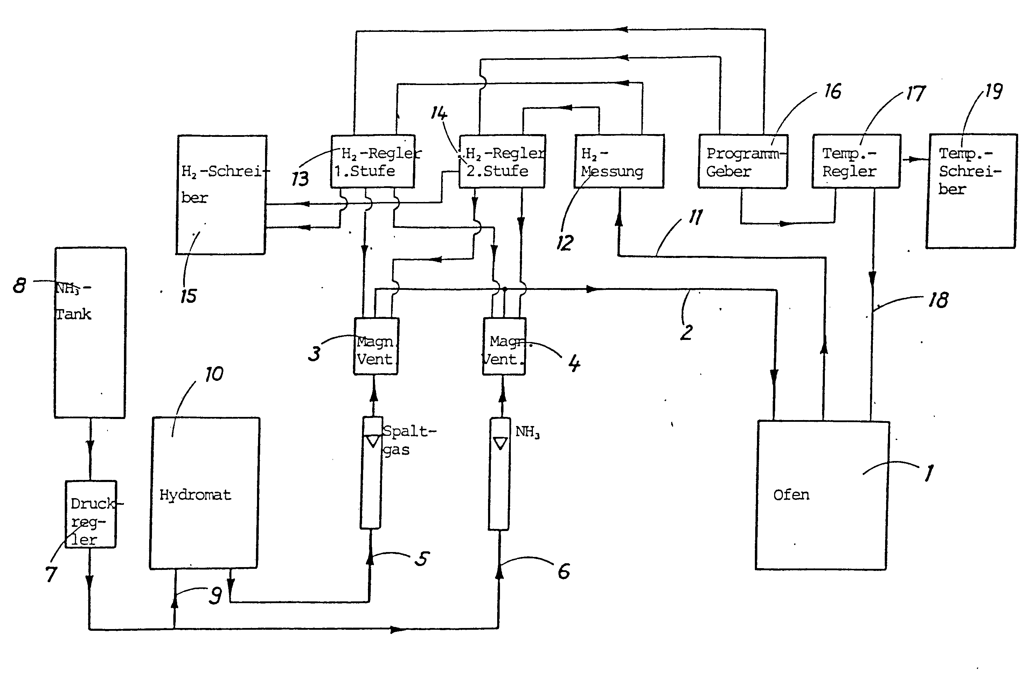

In der Zeichnung ist ein Ausführungsbeispiel des Gegenstandes der Erfindung dargestellt. Die Figur zeigt eine Anordnung zur Steuerung der Zusammensetzung der Ofenatmosphäre gemäß der Erfindung in schematischer Darstellung.

In die bei 1 angedeutete Kammer eines nicht weiter veranschaulichten, beheizten Wärmebehandlungsofens, in der die zu behandelnden Werkstücke sich befinden, mündet eine Gaszufuhrleitung 2, an die sich über ein erstes Magnetventil 3 und ein zweites Magnetventil 4 eine Zufuhrleitung 5 für Spaltgas und eine Zufuhrleitung 6 für Ammoniak anschließen. Die Ammoniak-Zufuhrleitung führt über einen Druckregler 7 zu einem Ammoniakvorratsbehälter 8, in dem Ammoniak unter Druck aufbewahrt ist. Von der Ammoniak-Zufuhrleitung 6 zweigt eine Leitung 9 ab, die eine Ammoniakspalteinrichtung 10 speist, in welcher eine Vorspaltung des Ammoniaks durch Wärmezufuhr erfolgt und aus der das Spaltgas über die Spaltgaszufuhrleitung 5 abströmt.

Aus der Ofenkammer 1 wird über eine Meßleitung 11 fortlaufend Gas abgesaugt, das einem Meßwertgeber 12 zugeführt wird, der auf dem Wege einer Analyse fortlaufend den $NH_3$- und/oder $H_2$-Anteil in dem Meßgas feststellt und daraus einen für das Nitrierpotential $(P_{NH3}/P_{H2})^{1,5}$ kennzeichnenden Meßwert bildet. Das Meßgas kann nach der Analyse entweder in die Atmosphäre abgeblasen oder wieder in die Ofenkammer 1 zurückgeführt werden.

Der Ausgang des Meßwertgebers 12 ist mit dem Eingang zweier Regler 13, 14 verbunden, die ihrerseits ausgangsseitig die beiden Magnetventile 3 und 4 ansteuern. Außerdem ist an die Ausgangsseite der beiden Regler 13 und 14 ein Nitrierpotential-Schreiber 15 angeschlossen, der eine dauernde Aufzeichnung über das eingestellte Nitrierpotential der Ofenatmosphäre gibt.

In den beiden Reglern 13 und 14 wird der von dem Meßgeber 12 gelieferte Ist-Wert des Nitrierpotentials jeweils mit einem Sollwert verglichen, der von einem Programmgeber 16 in die Regler eingegeben wird. Der Programmgeber 16 ist zeitabhängig; er ist derart ausgebildet, daß beispielsweise mittels einer Programmkassette verschiedene Programme in ihn eingegeben werden können, die er selbsttätig in jeweils programmgemäß vorgegebener Zeitabhängigkeit durchführt.

Zusätzlich zu den beiden Reglern 13 und 14 führt der Programmgeber 16 durch entsprechende Sollwertvorgabe einen nachgeschalteten Temperaturregler 17, der über eine Leitung 18 auf die Beheizung der Ofenkammer 1 Eingriff nimmt und der mit einem Temperaturschreiber 19 verbunden ist, welcher fortlaufend den Temperaturgang in der Ofenatmosphäre aufzeichnet.

In den Programmgeber 16 wird entsprechend der Art der jeweils zu behandelnden Werkstücke ein bestimmtes Programm mittels der Programmkassette eingegeben. Er gibt programmabhängig den beiden Reglern 13 und 14 sowie dem Temperaturregler 17 jeweils einen Sollwert vor, auf den der Ist-Wert des Nitrierpotentials bzw. der Temperatur eingeregelt wird. Die Anordnung ist dabei derart getroffen, daß der Regler 13 bei einem Zweistufen-Nitrierverfahren lediglich während der ersten Stufe wirkt und der zweite Regler 14 während der zweiten Stufe des Programmablaufes zur Wirkung kommt.

Die beiden Regler 13 und 14 regeln über die Magnetventile 3 und 4, entsprechend den von dem Programmgeber vorgegebenen zeitlichen Verlauf des Nitrierpotentials, die Anteile des Spaltgases und des Ammoniaks, die über die Gaszufuhrleitung 2 in die Ofenkammer 1 einströmen, derart, daß in dieser das jeweils notwendige Nitrierpotential aufrechterhalten bleibt, während andererseits über den Temperaturregler 17 der Temperaturgang der Ofenatmosphäre programmgemäß geregelt wird.

Falls mit dieser Anordnung lediglich ein einstufiges Nitrierverfahren durchgeführt werden soll, wird von dem Programmgeber 16 nur auf den einen Regler 13 und den Temperaturregler 17 Eingriff genommen.

Sollten bei dem Nitrierverfahren noch weitere Verfahrensparameter von Bedeutung sein, wie dies beispielsweise beim Zusatz von kohlenstoffhaltigen Gasen ($CO_2$, Methan etc.) der Fall ist, so können auch diese Parameter über entsprechende, dem Programmgeber 16 nachgeschaltete Regler selbsttätig programmgemäß geregelt werden.

## Patentansprüche

1. Anordnung zur Steuerung der Zusammensetzung der Atmosphäre eines Wärmebehandlungsofens zum Nitrieren der Oberfläche von Eisenteilen oder dergleichen unter Verwendung eines wasserstoff- und ammoniakhaltigen Gases, mit einer zumindest einen Teil des ammoniakhaltigen Gases in die Ofenkammer einspeisenden Ammoniakspalteinrichtung, der ein die Spaltgaszufuhr zu der Ofenkammer in Abhängigkeit von Meßwerten für das Nitrierpotential regelnder Regler zugeordnet ist, dessen zugeführte Meßwerte von einem fortlaufend mit Gas aus der Ofenatmosphäre versorgten Meßwertgeber über eine Meßschaltung abgegeben werden, dadurch gekennzeichnet, daß der die Spaltgaszufuhr zu der Ofenkammer (1) beeinflussende Regler (13, 14) einem selbsttätigen, zeitabhängigen Programmgeber (16) nachgeschaltet ist, der dem Regler (13, 14) einen programmabhängigen Sollwert vorgibt und daß durch den Programmgeber (16) zusätzlich ein Regler für die Zufuhr des ammoniakhaltigen Gases zu der Ofenkammer (1) sowie ein Temperaturregler (17) für die Ofenkammer (1) jeweils durch Sollwertvorgabe programmgemäß geführt sind.

2. Anordnung nach Anspruch 1, dadurch gekennzeichnet, daß der die Spaltgaszufuhr zu der Ofenkammer (1) beeinflussende Regler und der Regler für die Zufuhr des ammoniakhaltigen Gases zu der Ofenkammer (1) zu einer Regeleinheit (13) bzw. (14) zusammengefaßt sind.

3. Anordnung nach Anspruch 1 oder 2, dadurch gekennzeichnet, daß in einer Zufuhrleitung (5) des Spaltgases und einer Zufuhrleitung (6) des ammoniakhaltigen Gases zu der Ofenkammer (1) jeweils ein Steuerventil (3, 4) liegt und die Steuerventile (3, 4) durch den jeweils zugeordneten Regler (13, 14) angesteuert sind.

4. Anordnung nach einem der vorherigen Ansprüche, dadurch gekennzeichnet, daß den einzelnen Reglern (13, 14, 17) jeweils Aufzeichnungsvorrichtungen für für das Nitrierpotential kennzeichnende Werte und die Temperatur in der Ofenkammer (1) nachgeschaltet sind.

5. Anordnung nach einem der vorherigen Ansprüche, dadurch gekennzeichnet, daß der Programmgeber (16) ein zweistufiges Programm enthält und jeder der beiden Programmstufen ein eigener Regler (13 bzw. 14) für die Zufuhr des Spaltgases und des ammoniakhaltigen Gases zugeordnet ist.

6. Anordnung nach einem der vorherigen Ansprüche, dadurch gekennzeichnet, daß die Programme des Programmgebers (16) wahlweise austauschbar sind.

**Claims**

1. An arrangement for controlling the composition of the atmosphere of a heat-treatment furnace for nitriding the surface of iron parts or the like using an atmosphere of hydrogen or ammonia gas, comprising ammonia cracking means feeding at least part of the atmosphere of ammonia gas into the furnace chamber and coacting with control means for controlling the rate of feed of cracked gas into the furnace chamber in responce to measurements taken of the nitriding potential, the said measurements being furnished via a measuring circuit by a pick-up continuously supplied with gas from the furnace atmosphere, characterized in that the controller (13, 14) regulating the rate of feed of cracked gas to the furnace chamber (1) is connected to the output end of an automatic time-controlled program transmitter (16) setting the controller (13, 14) to a program-controlled desired value and that the program transmitter (16) commands in addition a controller controlling the feed of the atmosphere of ammonia gas into the furnace chamber (1) and a temperature controller (17) for the furnace chamber (1) by pre-setting the respective desired values.

2. An arrangement in accordance with claim 1, characterized in that the controller controlling the feed of cracked gas to the furnace chamber (1) and the controller controlling the feed of the atmosphere of ammonia gas to the furnace chamber (1) are united to one single control unit (13/14).

3. An arrangement in accordance with claim 1 or 2, characterized in that a supply line (5) for the cracked gas and a supply line (6) for supplying the atmosphere of ammonia gas into the furnace chamber (1) comprise each a control valve (3, 4) and that the said control valves (3, 4) are actuated by their respective associated controllers (13, 14).

4. An arrangement in accordance with any of the preceding claims, characterized in that the individual controllers (13, 14, 15) have connected to their output ends recording means for recording values characteristic of the nitriding potential and the temperature in the furnace chamber (1).

5. An arrangement in accordance with any of the preceding claims, characterized in that the program transmitter (16) comprises a two-step program and that a separate controller (13 or 14) for the supply of the cracked gas and the atmosphere of ammonia gas is provided for each of the two program steps.

6. An arrangement in accordance with any of the preceding claims, characterized in that the programs of the programs transmitter (16) are optionally exchangeable.

**Revendications**

1. Dispositif pour la régulation de la composition de l'atmosphère d'un four de traitement thermique destiné à la nitruration de la surface de pièces en fer ou assimilé, en utilisant un gaz contenant de l'hydrogène et de l'ammoniac, avec un équipement de dissociation de l'ammoniac envoyant dans la chambre du four au moins une partie du gaz contenant de l'ammoniac, équipement auquel est affecté un régulateur qui, en fonction de valeurs de mesure du potentiel de nitruration, règle l'aminée du gaz dissocié à la chambre du four, régulateur auquel sont envoyées, par l'intermédiaire d'un circuit de mesure, des valeurs de mesure provenant d'un capteur de mesure alimenté en continu par le gaz provenant de l'atmosphère du four, dispositif caractérisé en ce qu'en aval du régulateur (13, 14) agissant sur l'amenée du gaz dissocié à la chambre du four (1) est installé un transmetteur de programmes (16), automatique, asservi au temps, lequel donne au régulateur (13, 14) une valeur de consigne définie par un programme, et en ce que le transmetteur de programme (16) envoie en outre une valeur de consigne, prédéterminée par les programmes, tant à un régulateur de l'amenée du gaz contenant de l'ammoniac à la chambre du four (1) qu'à un régulateur (17) de la température de la chambre du four.

2. Dispositif selon la revendication 1, caractérisé en ce que le régulateur agissant sur l'amenée du gaz dissocié à la chambre du four (1) et le régulateur de l'amenée du gaz contenant de l'ammoniac à la chambre du four (1) sont rassemblés en une unité de régulation (13) ou (14).

3. Dispositif selon l'une quelconque des revendications 1 ou 2, caractérisé en ce qu'il y a dans une conduite d'amenée (5) du gaz dissocié et dans une conduite d'amenée (6) du gaz contenant de l'ammoniac et allant dans la chambre du four (1) une vanne de commande (3, 4), les vannes de commandes (3, 4) étant commendées par le régulateur (13, 14) qui est affecté à chacune d'entre elles.

4. Dispositif selon l'une quelconque des revendications précédentes, caractérisé en ce qu'en des différents régulateurs (13, 14, 17) sont installés des dispositifs d'enregistrement des valeurs caractéristiques du potentiel de nitruration et de la température dans la chambre du four (1).

5. Dispositif selon l'une quelconque des revendications précédentes, caractérisé en ce que le transmetteur de programmes (16) contient un programme en deux étapes, un régulateur (13 ou 14) de l'amenée du gaz contenant de l'ammoniac étant affecté à chacune des deux étapes du programme.

6. Dispositif selon l'une quelconque des revendications précédentes, caractérisé en ce que les programmes du transmetteur de programmes (16) sont librement interchangeables.